# EUROPÄISCHE PATENTANMELDUNG

(11) **EP 4 810 793 A1**
(43) Veröffentlichungstag der Anmeldung: **23.09.2026**
(21) Anmeldenummer: 25164062.9
(22) Anmeldetag: 17.03.2025
(51) Int. Cl.: F03D 7/02, F03D 7/04

(54) **VERFAHREN ZUR OPTIMIERUNG EINER WINDENERGIEANLAGE, WINDENERGIEANLAGE UND WINDPARK**

(71) Anmelder: Wobben Properties GmbH, 26607 Aurich (DE)
(72) Erfinder: Möller, Christian, 26603 Aurich (DE); Stemberg, Jochen, 26607 Aurich (DE); Nitsche, Maik, 26419 Schortens (DE)
(74) Vertreter: Eisenführ Speiser

(57) **Zusammenfassung**

Die Erfindung betrifft ein Verfahren zur Optimierung einer Windenergieanlage, eine Windenergieanlage, einen Windpark und ein Computerprogramm. Es wird ein Verfahren zur Optimierung einer Windenergieanlage vorgeschlagen, wobei die Windenergieanlage mit einer Betriebsführung betrieben wird, umfassend die Schritte: Simulieren der Windenergieanlage für unterschiedliche Windbedingungen und mehrere Rotorblattteilsegmente, wobei jede Simulation das Verhalten der Windenergieanlage bei einer der unterschiedlichen Windbedingung für einen vorbestimmten Zeitraum simuliert, wobei jede Simulation Zeitreihen von auftretenden Anstellwinkeln pro Rotorblattteilsegment erfasst, Kumulieren der Zeitreihen um kumulierte Verweildauern mehrerer Anstellwinkelgruppen mit Zuordnung zur jeweiligen Windgeschwindigkeitsgruppe für mehrere Rotorblattteilsegmente zu erhalten, Bereitstellen wenigstens eines Grenzanstellwinkels pro Rotorblattteilsegment, Vergleichen der kumulierten Verweildauern mit den Grenzanstellwinkel der jeweiligen Rotorblattteilsegmente, Anpassen der Betriebsführung bis die kumulierten Verweildauern außerhalb eines von den Grenzanstellwinkeln definierten Wertebereichs kleiner einem vordefinierten Schwellenwert sind.

## Beschreibung

Die Erfindung betrifft ein Verfahren zur Optimierung einer Windenergieanlage, eine Windenergieanlage, einen Windpark und ein Computerprogramm.

Windenergieanlagen wandeln Windenergie in elektrische Energie um. Dabei ist weithin bekannt, dass die jährlich gewonnene Energiemenge, engl. annual energy production, AEP, einerseits mit dem Durchmesser des Rotors skaliert. Zum anderen ist die elektrische Maximalleistung, die der angeschlossene Generator erzeugen kann, maßgebend für die gewonnene Energie.

Nichttrivial ist jedoch, dass selbst bei einer unangetasteten Rotor-Generator Konfiguration, bei gleichen Standortbedingungen verschiedene AEP erzeugt werden können. Maßgeblich dafür sind die zugrundeliegenden Betriebsweisen der Betriebsführung der Windenergieanlage.

Nach dem Stand der Technik wird meist ein einziger leistungsoptimierter Betriebsmodus für eine Anlagenkonfiguration entwickelt, welcher standortunabhängig eingesetzt wird. Während dieser Ansatz die bereits umfangreiche Entwicklungszeit verkürzt, verhindert er eine standortoptimale Auslegung eines Betriebsmodus. Im Umkehrschluss werden ertragsstärkere Betriebsmodi für jene Standorte existieren, die nicht der eigenen Norm entsprechen. Daraus ergibt sich die aktuelle Herausforderung der Anlagehersteller, Prozessketten aufzubauen, die standortabhängige Windenergieanlagen-Konfigurationen zulassen und den dadurch gewonnenen Mehrertrag zu realisieren.

Vor diesem Hintergrund lag der Erfindung die technische Aufgabe der Optimierung einer Windenergieanlage zugrunde, insbesondere der Betriebsführung einer Windenergieanlage. Überdies sollte diese Optimierung vorzugsweise eine Standortabhängigkeit von dem Standort Windenergieanlage miteinschließen.

In einem ersten Aspekt wird die der Erfindung zugrundeliegende Aufgabe durch ein Verfahren zur Optimierung einer Windenergieanlage gelöst, wobei die Windenergieanlage einen Rotor umfassend mindestens ein Rotorblatt umfasst, wobei das mindestens eine Rotorblatt eine Druckseite, eine Saugseite und einen veränderbaren Blatteinstellwinkel gegenüber einer Rotorebene aufweist und sich von einer Rotorblattwurzel zu einer Rotorblattspitze mit einer Rotorblattlänge erstreckt, wobei die Windenergieanlage mit einer Betriebsführung betrieben wird, umfassend die Schritte: Simulieren der Windenergieanlage für unterschiedliche Windbedingungen und mehrere Rotorblattteilsegmente, wobei jede Simulation das Verhalten der Windenergieanlage bei einer der unterschiedlichen Windbedingung für einen vorbestimmten Zeitraum simuliert, wobei jede Simulation Zeitreihen von auftretenden Anstellwinkeln pro Rotorblattteilsegment erfasst, wobei die unterschiedlichen Windbedingungen unterschiedliche Windgeschwindigkeiten umfassen und es sich bei dem Rotorblattteilsegment um einen Abschnitt des Rotorblatts mit einer vordefinierten Länge in Richtung der Rotorblattlänge, insbesondere von 1 m, handelt, Kumulieren der Zeitreihen um kumulierte Verweildauern mehrerer Anstellwinkelgruppen mit Zuordnung zur jeweiligen Windgeschwindigkeitsgruppe für mehrere Rotorblattteilsegmente zu erhalten, wobei jede Anstellwinkelgruppe jeweils einen Bereich von Anstellwinkeln umfasst und jede Windgeschwindigkeitsgruppe jeweils einen Bereich von Windgeschwindigkeiten umfasst, Bereitstellen wenigstens eines Grenzanstellwinkels pro Rotorblattteilsegment, Vergleichen der kumulierten Verweildauern mit den Grenzanstellwinkeln der jeweiligen Rotorblattteilsegmente, Anpassen der Betriebsführung bis die kumulierten Verweildauern außerhalb eines von den Grenzanstellwinkeln definierten Wertebereichs kleiner einem vordefinierten Schwellenwert sind.

Das Verfahren zur Optimierung einer Windenergieanlage umfasst insbesondere ein Verfahren zur Optimierung eines bestimmten Teils einer Windenergieanlage, beispielsweise eines Rotorblatts, sowie eine Optimierung der Betriebsführung einer Windenergieanlage. Als Resultat des erfindungsgemäßen Verfahrens wird eine optimierte Windenergieanlage bereitgestellt, insbesondere ein optimierter Teil der Windenergieanlage, beispielsweise ein optimiertes Rotorblatt und/oder eine Windenergieanlage mit optimierter Betriebsführung. Die Betriebsführung einer Windenergieanlage umfasst die Steuerung der Windenergieanlage und ist insbesondere in Form eines durch einen Computer ausgeführten Computerprogramms ausgestaltet. Dieser Computer, im Weiteren Steuerung genannt, ist insbesondere ausgestaltet Signale, beispielsweise Messsignale von Sensoren über Schnittstellen zu erhalten, Daten aus hinterlegten Datenbanken auszulesen und/oder Elemente der Windenergieanlage, beispielsweise Rotorblätter über einstellbare Blatteinstellwinkel anzusteuern, in diesem Beispiel also die Blatteinstellwinkel einzelner Rotorblätter zu ändern.

Ein Betriebsmodus wird beispielsweise einerseits von der Drehzahl der Windenergieanlage bei bestimmten mittleren Windgeschwindigkeiten *v_{inf}* beschrieben, oder, aus Sicht der Rotorblattaerodynamik, vom Verhältnis aus Blattspitzengeschwindigkeit *vₜᵢₚ* und mittlerer Windgeschwindigkeiten *v_{inf},* der Schnelllaufzahl, engl. tip speed ratio, TSR: $TSR = \frac{{v}_{tip}}{{v}_{inf}}$

Zum anderen wird ein Betriebsmodus beispielsweise durch den Blatteinstellwinkel, *γ*, gegenüber der Rotorebene bestimmt. Anlagenentwickler verwenden viele Ressourcen auf die Optimierung eines einzelnen Betriebsmodus hinsichtlich der Maximierung des AEP und unter Berücksichtigung der maximalen Anlagenlasten. Dieser Aufwand ist insofern gerechtfertigt, als dass selbst geringfügige Änderungen an der Betriebsführung bereits signifikante Ertragssteigerungen bewirken oder auch die Belastungsgrenzen verschiedener Anlagenkomponenten überschreiten können.

Die wesentlichen Einflussparameter auf die optimale Betriebsführung sind dabei beispielsweise: Rotorblattentwurf, Mechanische und elektrische Wirkungsgrade (Triebstrang, Generator, usw.), Belastungsgrenzen von Anlagenkomponenten, maximal zulässige Geräuschemission, Windfeldparameter (Turbulenzintensität, Scherung, Luftdichte). Diese optimale Betriebsführung wird nach dem Stand der Technik auf Leistung optimiert und für eine Anlagenkonfiguration entwickelt, die standortunabhängig eingesetzt wird. Die bekannten leistungsoptimierten Betriebsmodi von Windenergieanlagen sind also nicht standortoptimiert.

In einer Ausführungsform des erfindungsgemäßen Verfahrens wird ein Verfahren zur Optimierung eines Rotorblatts einer Windenergieanlage bereitgestellt. Im Weiteren soll nun der Einfluss des Rotorblattentwurfs im Allgemeinen und der Rotorblattaerodynamik im Speziellen auf die Optimierung der Windenergieanlage, insbesondere der AEP der Windenergieanlage weiter beschrieben werden.

Die aerodynamischen Eigenschaften eines jeden Rotorblattes werden auf einen bestimmten Betriebspunkt hin optimiert. Eine leistungsoptimierte Betriebsweise wird den Rotor möglichst lang in diesem Betriebspunkt betreiben. Limitierend wirken hierbei vorrangig zwei Effekte:
1. Die maximale Rotordrehzahl ist (meist aus aeroakustischen, oder Belastungsgründen) begrenzt. Damit kann die TSR nicht beliebig lang auf einem aus Leistungssicht optimalen Wert gehalten werden, sondern fällt bei Erreichen der s.g. Regeldrehzahl ab. Bei weiter ansteigender Windgeschwindigkeit wird die Anlagenregelung mittels Anpassungen an *γ* die Regeldrehzahl einstellen und die TSR fällt weiter ab.
2. Ein Abweichen von einem optimalen Blatteinstellwinkel kann aus Belastungsgründen notwendig werden (Stichworte: peak-shaving, thrust-limiter), oder sobald die aerodynamischen Grenzanstellwinkel überschritten werden. Besonders Letzteres wird durch 1. noch verstärkt.

Im Weiteren soll nun der Einfluss der aerodynamischen Grenzanstellwinkel auf die Optimierung der Windenergieanlage, insbesondere der Optimierung der AEP der Windenergieanlage weiter beschrieben werden.

Aerodynamisch wirksame Profile haben einen auslegungsgemäßen Betriebsbereich. Mittels Verdrehen der Profile gegenüber der Anströmung variiert der Anströmwinkel *α*. Dabei gilt in dem Anströmwinkelbereich, bei dem die Strömung der Profilkontur folgt, dass z.B. der Profilauftrieb linear mit *α* skaliert. Dieser Zusammenhang gilt solange, bis die Strömung von der Profilkontur ablöst. Dieser Effekt tritt sowohl bei besonders hohen als auch bei besonders niedrigen *α* auf (saugseitige bzw. druckseitige Strömungsablösung, engl. "positive, negative stall"). Eine beginnende Strömungsablösung zeichnet sich zunächst durch einen Anstieg in der Geräuschemission aus, bevor es bei weiter ablösender Strömung zu Auftriebseinbrüchen kommen kann. Diese Anströmwinkelbereiche gilt es in der Auslegung von Betriebsweisen für Windkraftanlagen zu vermeiden. Dazu werden Betriebsweisen so ausgelegt, dass die auftretenden Anströmwinkel einen vorher definierten Abstand zu den Grenzanstellwinkeln einhalten, sogenannte Anstellwinkelreserven.

Die Strömungsbedingungen an einem Rotorblatt einer Windenergieanlage sind hochgradig komplex: Einerseits kann die Anströmung (Wind) nur stochastisch beschrieben werden. Andererseits reagiert sowohl das Rotorblatt als auch die gesamte Windenergieanlage (mittels Verformungen und Regelungseingriffen) dynamisch auf, bei der Energieumwandlung, entstehende Kräfte und Momente. Gleichzeitig lassen sich die Bedingungen an realen Anlagen in der bekannten Modellbildung nur unzureichend abbilden, da exakte Standortbedingungen nicht hinreichend ermittelt und in die Simulation eingebettet werden. Die Vorhersage von tatsächlich auftretenden Anströmwinkeln ist demnach bisher nur sehr eingeschränkt möglich. Nach dem Stand der Technik bedienen sich Aerodynamikentwickler der Empirie: Vereinfachte Modellannahmen, die Verwendung der hinreichend bekannten "Blade element momentum theory" (BEM) zusammen mit Erfahrungswerten aus bereits in Betrieb befindlichen Windenergieanlagen lassen eine Extrapolation auf die Anströmwinkel zukünftiger Windenergieanlagen zu. Die Genauigkeit dieser bekannten Vorgehensweisen ist aus besagten Gründen allerdings mangelhaft. Der Erfindung liegt die Erkenntnis zugrunde, dass eine Detaillierung bekannter Prozesse und Reduzierung des Anteils der Empirie zugunsten statistischer Methoden die Genauigkeit dieser Voraussagen steigert. Zusätzlich wurde erkannt, dass mit der Integration verschiedener, mitunter noch nicht untersuchter, Einflussparameter in die Vorhersage von Anströmwinkeln ebenfalls Fortschritte bezüglich der Genauigkeit erzielt werden können.

In einem Schritt umfasst ein erfindungsgemäßes Verfahren daher ein Simulieren der Windenergieanlage für unterschiedliche Windbedingungen und mehrere Rotorblattteilsegmente, wobei jede Simulation das Verhalten der Windenergieanlage bei einer der unterschiedlichen Windbedingung für einen vorbestimmten Zeitraum simuliert, wobei jede Simulation Zeitreihen von auftretenden Anstellwinkeln pro Rotorblattteilsegment erfasst, wobei die unterschiedlichen Windbedingungen unterschiedliche Windgeschwindigkeiten umfassen und es sich bei dem Rotorblattteilsegment um einen Abschnitt des Rotorblatts mit einer vordefinierten Länge in Richtung der Rotorblattlänge, insbesondere von 1 m, handelt.

Beispielsweise ist das Rotorblatt in mehrere Rotorblattteilsegmente mit je 1 m Länge in Richtung der Rotorblattlänge unterteilt. In anderen Beispielen können die Rotorblattteilsegmente auch kürzer oder länger ausfallen. Die Anzahl an Rotorblattteilsegmenten oder die Länge eines Rotorblattteilsegments ist somit insbesondere von Rotorblatt zu Rotorblatt bei unterschiedlicher Rotorblattlänge unterschiedlich.

Der Schritt des Simulierens umfasst dabei beispielsweise Methoden der Mehrkörpersimulation, die mithilfe eines Computer durchgeführt werden. Bekannte Computerprogramme zum durchführen solcher Mehrkörpersimulationen sind beispielsweise HAWC2 von DTTU Wind Energy, Bladed von DNV, FLEX5 von DTU Lyngby, Simpack von Simpack, Open-FAST von NREL, FOCUS6 von WMC, Qblade von TU Berlin, Vortexje von Baayen & Heinz sowie Ashes von SIMIS as. Für das Simulieren der Windenergieanlage werden dabei unterschiedliche Windbedingungen angenommen, der die Windenergieanlage ausgesetzt ist. Diese unterschiedlichen Windbedingungen umfassen beispielsweise unterschiedliche Kombinationen unterschiedlicher Werte der Windparameter Windgeschwindigkeit, Luftdichte, Windscherung, Turbulenzintensität, Extremwetterereignisse. Diese Liste möglicher Windparameter, die in den unterschiedlichen Windbedingungen betrachtet werden ist dabei nicht abschließend.

In dem Schritt des Simulierens wird der Betriebsmodus der Windenergieanlage angenommen, mit dem die Windenergieanlage betrieben wird, bevorzugt ist dies ein mit bekannten Prozessen leistungsoptimierter Betriebsmodus der Windenergieanlage.

Der Schritt des Simulierens bildet beispielsweise jeweils 10 Minuten des Anlagenverhaltens bei bestimmten der unterschiedlichen Windbedingungen ab. Die daraus entstehenden Ergebnisse werden als Zeitreihen bezeichnet. Aus einer Vielzahl von Zeitreihen, aus Simulationen mit anderen der unterschiedlichen Windbedingungen, die in dem Schritt des Simulierens durchgeführt werden, beispielsweise auch Simulationen die während einer Zertifizierung der Windenergieanlage berechnet werden, ergibt sich eine statistisch relevante Ergebnismenge, die erfindungsgemäß für die Bestimmung der Anstellwinkelreserven verwendet wird.

Eine Zeitreihe umfasst erfindungsgemäß die Häufigkeit und/oder Dauer des Auftretens bestimmter Anströmwinkel, auch Anstellwinkel genannt, für ein Rotorblattteilsegment. Aus einer Zeitreihe geht also hervor, wie oft bzw. wie lange bestimmte Anstellwinkel während der Simulation an dem Rotorblattteilsegment aufgetreten sind. Die Auflösung der Zeitreihe ist dabei abhängig von der Simulation und umfasst beispielsweise alle in der Simulation aufgetretenen Anstellwinkel in einer Auflösung von 1°, bevorzugt 0,1° sowie die Dauer des Auftretens mit einer Auflösung von 1 s, bevorzugt 0,1 s, und/oder falls die Zeitreihen das Auftreten mit einer ganzen Zahl aufzeichnet, eine Auflösung beziehungsweise Aufzeichnungsfrequenz von 1/s, bevorzugt 1/0,1s. Die in der Simulation aufgetretenen Windgeschwindigkeiten werden beispielsweise mit einer Auflösung von 1 m/s in den Zeitreihen aufgezeichnet, bevorzugt 0,1 m/s.

In einem weiteren Schritt umfasst ein erfindungsgemäßes Verfahren ein Kumulieren der Zeitreihen um kumulierte Verweildauern mehrerer Anstellwinkelgruppen mit Zuordnung zur jeweiligen Windgeschwindigkeitsgruppe für mehrere Rotorblattteilsegmente zu erhalten, wobei jede Anstellwinkelgruppe jeweils einen Bereich von Anstellwinkeln umfassen und jede Windgeschwindigkeitsgruppe jeweils einen Bereich von Windgeschwindigkeiten umfasst.

Der Schritt des Kumulierens der Zeitreihen umfasst insbesondere ein Zusammenfassen der während der Simulation in den Zeitreihen erfassten Daten. Eine Anstellwinkelgruppe umfasst dabei beispielsweise alle Daten mit aufgetretenen Anstellwinkeln in einem Bereich von 2°, also beispielsweise alle Daten mit aufgetretenen Anstellwinkeln zwischen -13° und -15°, bevorzugt 1°, falls die Auflösung der Zeitreihen bezüglich Anstellwinkel weniger als 1° beträgt. Eine Windgeschwindigkeitsgruppe umfasst dabei beispielsweise alle Daten mit aufgetretenen Windgeschwindigkeiten in einem Bereich von 2 m/s, also beispielsweise alle Daten mit aufgetretenen Windgeschwindigkeiten zwischen 27 m/s und 29 m/s, bevorzugt 1,5 m/s, besonders bevorzugt 1 m/s falls die Auflösung der Zeitreihen bezüglich Windgeschwindigkeit weniger als 1 m/s beträgt.

Bei den kumulierten Verweildauern handelt es sich insbesondere um einen vierdimensionalen Datensatz, der die Verweildauern an allen in dem Schritt des Simulierens aufgetretenen Anstellwinkeln bei den entsprechenden aufgetretenen Windgeschwindigkeiten für die entsprechenden in dem Schritt des Simulierens simulierten Rotorblattteilsegmente in kumulierter Form, also einer bestimmten Auflösung in Windgeschwindigkeitsgruppen und Anstellwinkelgruppen umfasst.

In einem weiteren Schritt umfasst ein erfindungsgemäßes Verfahren ein Bereitstellen wenigstens eines Grenzanstellwinkels pro Rotorblattteilsegment. Der Grenzanstellwinkel gibt dabei einen maximalen Anstellwinkel an, der im Betrieb des Rotorblatts an dem jeweiligen Rotorblattteilsegment laut Auslegung des Rotorblatts auftreten darf. Üblicherweise ist der Grenzanstellwinkel gleich dem Stallwinkel, einem Anstellwinkel, ab dem an dem jeweiligen Rotorblattteilsegment eine Strömungsablösung auftritt. Laut Auslegung des Rotorblatts bedeutet dabei, dass im Entwurf des Rotorblatts Lasten, Auftrieb und Geräuschemission des Rotorblatts in Abhängigkeit des Anstellwinkels betrachtet werden und der Grenzanstellwinkel einen maximal zulässigen Anstellwinkel für verschiedene Rotorblattteilsegmente angibt, mit dem das Rotorblatt betrieben werden darf. Es ist nun eine Erkenntnis der Erfindung, dass diese theoretisch bestimmten Grenzanstellwinkel einen vorteilhaften Betrieb der Windenergieanlage verhindern können und dass es durchaus vorteilhaft sein kann das Rotorblatt auch mit Anstellwinkeln größer dem Grenzanstellwinkel zu betreiben.

In einem weiteren Schritt umfasst ein erfindungsgemäßes Verfahren ein Vergleichen der kumulierten Verweildauern mit den Grenzanstellwinkel der jeweiligen Rotorblattteilsegmente. Für jedes Rotorblattteilsegment, für das die kumulierten Verweildauern Daten umfassen, werden die in dem Schritt des Simulierens erfassten Anstellwinkel mit dem Grenzanstellwinkel verglichen. Dieses Vergleichen stellt insbesondere darauf ab, in der Simulation aufgetretene Anstellwinkel zu identifizieren, die größer sind als der Grenzanströmwinkel, also insbesondere Situationen während der Simulation widerspiegeln, in denen die Strömung an dem Rotorblattteilsegment abgelöst war und insbesondere die Verweildauern an solchen Anstellwinkeln größer dem Grenzanstellwinkel zu ermitteln.

In einem weiteren Schritt umfasst ein erfindungsgemäßes Verfahren ein Anpassen der Betriebsführung bis die kumulierten Verweildauern außerhalb eines von den Grenzanstellwinkeln definierten Wertebereichs kleiner einem vordefinierten Schwellenwert sind. Dieser Schritt umfasst also eine Betrachtung der Anstellwinkel, die größer sind als der Grenzanströmwinkel, insbesondere der kumulierten Verweildauern an den Anstellwinkeln die größer sind als der Grenzanstellwinkel. Zur Beurteilung einer erfindungsgemäß optimierten Betriebsführung und damit einer erfindungsgemäß optimierten Windenergieanlage, wird ein Schwellenwert vordefiniert, der einen Grenzwert für die Verweildauer an Anstellwinkeln größer dem Grenzanstellwinkel angibt. Für diese Betrachtung werden beispielsweise alle Verweildauern an Anstellwinkeln größer dem Grenzanstellwinkel zusammengefasst, insbesondere addiert, gegebenenfalls gewichtet addiert, und mit dem Schwellenwert verglichen.

In einer bevorzugten Ausführungsform gibt der vordefinierte Schwellenwert auch an, bis zu welchem Maß die simulierten Anstellwinkel größer sein dürfen als der Grenzanstellwinkel.

Dies ist in einem Ausführungsbeispiel durch eine Gewichtung der Verweildauern an Anstellwinkeln größer dem Grenzanstellwinkel, je nach Abweichung vom Grenzanstellwinkel, bei der Summierung aller Verweildauern realisiert. Verweildauern an Anstellwinkeln mit geringer Abweichung vom Grenzanstellwinkel werden dabei weniger gewichtet als Verweildauern an Anstellwinkeln mit großer Abweichung vom Grenzanstellwinkel.

Wenn im Rahmen der Erfindung von größer als der Grenzanstellwinkel die Rede ist, wird von einem saugseitigen, positiven Anstellwinkel ausgegangen. Betrachtet man druckseitige, negative Anstellwinkel sind die entsprechenden Ausführungen als kleiner als der Grenzanstellwinkel (vorzeichenbedingt) zu verstehen. Der Grenzanstellwinkel wird im Rahmen dieser Erfindung auch als Grenzanströmwinkel bezeichnet.

Dem vordefinierten Schwellenwert liegt die Erkenntnis zugrunde, dass in bestimmten Situationen ein an einem Rotorblattteilsegment auftretender Strömungsabriss in gewissen Maßen nicht nachteilig ist. Bekannte Regelungen, also Betriebsführungen von Windenergieanlagen versuchen grundsätzlich das Auftreten von Strömungsabrissen zu vermeiden. Der Erfindung liegt die Erkenntnis zugrunde, dass durch solche Regelungen beispielsweise die generierte Leistung, insbesondere die AEP der Windenergieanlage unnötig begrenzt wird. Auf der anderen Seite darf Strömungsabriss je nach Rotorblattteilsegment auch nicht zu oft auftreten, da dies negative Effekte mit sich führt, wie beispielsweise erhöhte Abnutzung durch erhöhte Lasten, erhöhte Geräuschemission oder Auftriebsverlust. Der vordefinierte Schwellenwert stellt eine Lösung dieses Optimierungsproblems dar.

In diesem Schritt wird die Betriebsführung der Windenergieanlage entsprechend der Ergebnisse des Vergleichs der kumulierten Verweildauern mit den Grenzanstellwinkeln angepasst. Anschließend werden insbesondere die Schritte des Simulierens, Kumulierens, Vergleichens und gegebenenfalls auch Anpassens wiederholt, bis die kumulierten Verweildauern außerhalb eines von den Grenzanstellwinkeln definierten Wertebereichs kleiner einem vordefinierten Schwellenwert sind. Vorzugsweise wird somit die Windenergieanlage anhand eines iterativen Optimierungsprozesses optimiert.

In einer bevorzugten Ausführungsform wird in dem Schritt des Anpassens der Betriebsführung der Windenergieanlage zunächst eine erste optimierte Betriebsführung für den Schritt des Simulierens, Kumulierens, Vergleichens und gegebenenfalls, falls eine erneute Optimierung nötig ist, auch Anpassens angenommen, die sich von der Betriebsführung der Windenergieanlage unterscheidet. Die Betriebsführung der Windenergieanlage wird dabei zunächst nicht an die erste optimierte Betriebsführung angepasst. In einem Fall, indem die kumulierten Verweildauern aus den vorhergehenden Schritten mit der ersten optimierten Betriebsführung nicht die Kriterien des vordefinierten Schwellenwertes erfüllen, wird die erste optimierte Betriebsführung auf eine zweite optimierte Betriebsführung angepasst. Die Schritte werden entsprechend wiederholt. Sobald eine optimierte Betriebsführung den Kriterien des vordefinierten Schwellenwerts genügt, also die kumulierten Verweildauern aus den vorhergehenden Schritten mit der optimierten Betriebsführung außerhalb eines von den Grenzanstellwinkeln definierten Wertebereichs kleiner einem vordefinierten Schwellenwert sind, wird die Betriebsführung der Windenergieanlage an die optimierte Betriebsführung angepasst.

Bevorzugt ist ein erfindungsgemäßes Verfahren in der Steuerung einer Windenergieanlage implementiert und optimiert diese Windenergieanlage, besonders bevorzugt periodisch.

In einer vorteilhaften Ausgestaltung eines Aspekts der Erfindung, umfasst das Verfahren ferner den Schritt: Bereitstellen von mindestens einem standortspezifischen Parameter am Standort der Windenergieanlage, wobei der Schritt des Simulierens ferner unter Berücksichtigung des mindestens einen standortspezifischen Parameters durchgeführt wird. Das Bereitstellen des standortspezifischen Parameters umfasst dabei beispielsweise Messungen von standortspezifischen Windbedingungen anhand von entsprechenden an der Windenergieanlage angebrachten Sensoren, und/oder Messungen durchgeführt durch einen Messmast, insbesondere durch einen Messmast eines Windparks, der die Windenergieanlage umfasst. Bei dem standortspezifischen Parameter handelt es sich vorzugsweise um einen standortspezifischen Windparameter.

In einer bevorzugten Variante der obigen Ausgestaltung umfasst der mindestens eine standortspezifische Parameter eine Turbulenzintensität, und/oder eine Luftdichte, und/oder eine horizontale Windscherung, und/oder eine vertikale Windscherung, und/oder ein lokales Wetterereignis. Der standortspezifische Parameter wird bevorzugt direkt mit entsprechenden Sensoren gemessen, beispielsweise Luftdichtesensoren, und/oder aus der Messung anderer standortspezifischer Parameter hergeleitet, beispielsweise die Turbulenzintensität aus Messungen von Dehnungssensoren an der Windenergieanlage. Die in dieser Variante aufgeführte Liste ist nicht abschließend und das Verfahren ist derart ausgestaltet, dass auch andere als die aufgeführten standortspezifischen Parameter bereitgestellt und in die Simulation integriert werden können.

Der standortspezifische Parameter umfasst insbesondere sowohl lokale Strömungsereignisse, als auch lokale Wetterereignisse. Lokale Strömungsereignisse sind dabei auf die unmittelbare Umgebung am Standort der Windenergieanlage zurück zu führen, beispielsweise eine gewisse Windscherung durch einen durch einen Berg oder eine Erhebung bedingten Windschatten. Lokale Wetterereignisse umfassen temporäre Ereignisse, wie Extremwettersituationen oder Zustände der Atmosphäre, beispielsweise besondere Windscherung aufgrund von Temperaturunterschieden zwischen Luftschichten. Bevorzugt werden in der Simulation die lokalen Strömungsereignisse berücksichtigt, da diese vorhersehbarer sind. Ein Windschatten durch eine geologische Erhebung wird beispielsweise an einem entsprechenden Standort der Windenergieanlage immer auftreten, wenn der Wind aus der entsprechenden Richtung weht. Gerade für Standorte die anfällig für Extremwettersituationen, beispielsweise Stürme oder sehr starke Winde sind, ist es überdies oder alternativ vorteilhaft diese lokalen Wetterereignisse durch einen oder mehrere entsprechende standortspezifische Parameter in der Simulation zu berücksichtigen.

Der expliziten Unterteilung der Windscherung in horizontale Windscherung und vertikale Windscherung liegt die Erkenntnis zugrunde, dass für bestimmte Standorte die horizontale Windscherung stärker ausgeprägt ist als die vertikale Windscherung und somit für die Optimierung der Windenergieanlage wichtiger ist. Dies ist beispielsweise bei Standorten an Hanglagen der Fall. Bevorzugt werden standortspezifische Parameter für die horizontale Windscherung und vertikale Windscherung in der Simulation berücksichtigt.

Das Miteinbeziehen eines oder mehrerer standortspezifischer Parameter in die Simulation ermöglicht eine genauere und bessere Optimierung der Windenergieanlage, da die Simulation die tatsächlichen Bedingungen, denen die Windenergieanlage an ihrem Standort ausgesetzt ist, besser abbildet.

In einer weiteren vorteilhaften Ausgestaltung eines Aspekts der Erfindung, umfasst das Verfahren ferner den folgenden Schritt: Bereitstellen von mindestens einem anlagenspezifischen Parameter der Windenergieanlage, wobei der Schritt des Simulierens ferner unter Verwendung des mindestens einen anlagenspezifischen Parameter durchgeführt wird. Die dieser Ausgestaltung zugrundeliegende Erkenntnis ist die, dass anlagenspezifische Parameter ebenso wie standortspezifische Parameter einen Einfluss auf die Windenergieanlage, insbesondere die AEP der Windenergieanlage haben. Die Vorteile und weiteren Aspekte der obigen Ausgestaltung bezüglich standortspezifischer Parameter treffen daher auch auf diese Ausgestaltung zu.

In einer bevorzugten Variante der obigen Ausgestaltung umfasst der mindestens eine anlagenspezifische Parameter: einen Verschmutzungsgrad des mindestens einen Rotorblattes, und/oder einen Abnutzungsgrad des mindestens einen Rotorblattes, und/oder eine produktionsbedingte Formabweichung des mindestens einen Rotorblattes (108), und /oder ein aerodynamisches Anbauteil des mindestens einen Rotorblattes (108), und /oder vorbestimmte Maximallasten, insbesondere für mindestens eines der Rotorblattteilsegmente, für die das mindestens eine Rotorblatteilsegment ausgelegt ist. Verschmutzung wirkt sich negativ auf die aerodynamischen Eigenschaften eines Rotorblattes aus. Anhand von speziellen Modellen ist es beispielsweise möglich für ein oder mehrere Rotorblätter eine verschmutze Polare zu simulieren und den Verschmutzungsgrad eines oder mehrerer Rotorblätter in die Simulation zu integrieren. Ebenso wirkt sich der Abnutzungsgrad eines Rotorblattes oder eine produktionsbedingte Formabweichung negativ auf die aerodynamischen Eigenschaften des Rotorblattes aus. Der Abnutzungsgrad und/oder die produktionsbedingte Formabweichung lässt sich beispielsweise analog zum Verschmutzungsgrad in die Simulation integrieren. Ebenso ist es möglich ein oder mehrere aerodynamische Anbauteile anhand der anlagenspezifischen Parameters in der Simulation zu berücksichtigen, die sich üblicherweise positiv auf die aerodynamischen Eigenschaften des Rotorblattes auswirken.

Vorbestimmte Maximallasten definieren die maximal zulässigen Lasten, die auf die Windenergieanlage, insbesondere auf bestimmte Teile der Windenergieanlage wirken dürfen. Eine Überschreitung dieser Maximallasten hätte negative Auswirkungen auf die Windenergieanlage und führt beispielsweise zu Schäden an der Windenergieanlage oder übermäßige Abnutzung. Bevorzugt werden Maximallasten für einzelne Teile der Windenergieanlage vorbestimmt, beispielsweise Maximallasten für den Turm, die Gondel, die Nabe, den Rotor, einzelne Rotorblätter und besonders bevorzugt einzelne Rotorblattteilsegmente. Diese Maximallasten ergeben sich für gewöhnlich aus dem Auslegungsprozess, also dem Entwurfsprozess eines Rotorblattes. Je nach Typ und Form des Rotorblattes weisen für gewöhnlich manche Rotorblattteilsegmente, insbesondere nabennahe Rotorblattteilsegmente, höhere zulässige Maximallasten auf, als beispielsweise nabenferne Rotorblattteilsegmente. Ebenso weißen unterschiedliche Turmtypen unterschiedliche zulässige Maximallasten auf.

Das Miteinbeziehen eines oder mehrerer anlagenspezifischer Parameter in die Simulation ermöglicht eine genauere und bessere Optimierung der Windenergieanlage, da die Simulation die tatsächlichen Bedingungen und den tatsächlichen Zustand der Windenergieanlage besser abbildet.

In einer weiteren vorteilhaften Ausgestaltung eines Aspekts der Erfindung, ist die Windenergieanlage Teil eines Windparks umfassend mehrere Windenergieanlagen und umfasst das Verfahren ferner den folgenden Schritt: Bereitstellen von mindestens einer Lage mindestens einer der mehreren Windenergieanlagen des Windparks in Bezug auf die Windenergieanlage, wobei der Schritt des Simulierens die mindestens eine Lage mindestens einer der mehreren Windenergieanlagen des Windparks berücksichtigt und insbesondere potentielle Nachlaufeffekte der mindestens einen der mehreren Windenergieanlagen des Windparks anhand der mindestens eine Lage simuliert.

Bei entsprechender Windrichtung tritt in Windparks die Situation auf, dass erste Windenergieanlagen durch die Drehung des Rotors und dadurch an den Rotorblättern auftretende Verwirbelungen den auf zweite Windenergieanlagen eintreffenden Wind beeinflussen. Dies ist insbesondere der Fall, wenn eine der zweiten Windenergieanlagen in Windrichtung hinter einer der ersten Windenergieanlagen positioniert ist. Diese sogenannten Nachlaufeffekte beinhalten unter anderem eine Reduzierung der Windgeschwindigkeit, eine Erhöhung einer Turbulenzintensität und/oder eine stärkere Windscherung. An den Betrieb einer der zweiten Windenergieanlagen sind somit zusätzliche Herausforderungen aufgrund der Nachlaufeffekte gestellt. Beispielsweise kann eine Regelung einer der zweiten Windenergieanlagen ausgehend von den Nachlaufeffekten angepasst und bevorzugt optimiert werden, um die AEP der zweiten Windenergieanlage zu optimieren.

Durch das Einbeziehen der Lage mindestens einer der mehreren Windenergieanlagen des Windparks, bevorzugt aller der mehreren Windenergieanlagen des Windparks, in der Simulation der Windenergieanlage wird die Genauigkeit der Simulation bezüglich den tatsächlichen Bedingungen, denen die Windenergieanlage im Betrieb an dem Standort ausgesetzt sein wird, erhöht. Insbesondere werden die Nachlaufeffekte der mindestens einen der mehreren Windenergieanlagen des Windparks, bevorzugt aller der mehreren Windenergieanlagen des Windparks, auf die Windenergieanlage simuliert. Dies ermöglicht eine bessere und genauere Optimierung der Windenergieanlage.

In einer Ausführungsform werden die individuellen Konfigurationen der mehreren Windenergieanlagen des Windparks in der Simulation der Nachlaufeffekte berücksichtigt. Insbesondere werden dabei Rotorblattkonfigurationen, wie beispielsweise Rotorblattlänge und/oder Rotorblatttyp, Nabenhöhe und/oder Nenndrehzahl für verschiedene Windgeschwindigkeiten miteinbezogen. Dies erhöht weiter die Genauigkeit der Simulation bezüglich den tatsächlichen Bedingungen am Standort, beziehungsweise potentiellen Standort der Windenergieanlage und ermöglicht eine bessere und genauere Optimierung der Windenergieanlage.

In einer weiteren vorteilhaften Ausgestaltung eines Aspekts der Erfindung, weist der vordefinierte Schwellenwert einen Wert auf, der das Auftreten folgender Ereignisse mit negativem Effekt an der Windenergieanlage verhindert: Überschreiten eines vordefinierten ersten Schwellwerts der Geräuschemission der Windenergieanlage, und/oder Überschreiten von vordefinierten Maximallasten, für die die Windenergieanlage ausgelegt ist, und/oder Verringerung der generierten Leistung der Windenergieanlage.

Gerade in bewohnten Gebieten kommt es vor, dass die Geräuschemission von Windenergieanlagen durch Behörden beschränkt ist. Nicht zu vernachlässigen sind dabei die Geräuschemissionen die durch Verwirbelungen an den Rotorblättern generiert wird. Hierbei spielt auch Strömungsablösung, auch Strömungsabriss, am Rotorblatt eine nicht zu vernachlässigende Rolle. Ein Rotorblatt, dass über die gesamte Länge im Strömungsabriss betrieben wird ist dabei deutlich lauter als ein Rotorblatt, an dem im Betrieb an keiner Stelle Strömungsabriss auftritt. Der vordefinierte Schwellenwert ist daher derart definiert, dass Strömungsabriss an den Rotorblättern nur begrenzt auftritt, sodass die Geräuschemissionen der Windenergieanlage einen insbesondere behördlich festgelegten ersten Schwellwert der Geräuschemission der Windenergieanlage nicht überschreiten.

Im Hinblick auf Sicherheit des Betriebs der Windenergieanlage und/oder Abnutzung einzelner Komponenten der Windenergieanlage sind auf die Windenergieanlage wirkende Maximallasten definiert. Insbesondere sind dabei für einzelne Komponenten der Windenergieanlage wie beispielsweise Rotorblätter, Gondel und Turm spezifische Maximallasten vordefiniert. Mit zunehmendem Strömungsabriss im Betrieb eines Rotorblatts nehmen dabei ebenfalls die auf das Rotorblatt wirkenden Lasten zu. Der vordefinierte Schwellenwert ist daher derart definiert, dass an dem Rotorblatt auftretender Strömungsabriss derart beschränkt ist, dass die dadurch auf das Rotorblatt wirkenden Lasten die vordefinierten Maximallasten nicht überschreiten.

Im Betrieb an den Rotorblättern auftretender Strömungsabriss wirkt sich ebenfalls auf den Auftrieb des Rotorblatts und somit auf die generierte Leistung der Windenergieanlage aus. Es ist eine Erkenntnis der Erfindung, dass Strömungsabriss an einem Rotorblatt in gewissem Maße keine negativen Auswirkungen auf die generierte Leistung der Windenergieanlage hat, nämlich bis zum vordefinierten Schwellenwert.

In einer weiteren vorteilhaften Ausgestaltung eines Aspekts der Erfindung, ist der vordefinierte Schwellenwert für Rotorblattteilsegmente in einem mittleren Bereich *Rₘ* von 30% der Rotorblattlänge bis 60% der Rotorblattlänge, bevorzugt 20% der Rotorblattlänge bis 70% der Rotorblattlänge definiert ist als ${freq}_{mid} \left({v}_{inf}, r, α\right) = \frac{{VD}_{max , mid}}{LD} ∀ r ∈ {R}_{m} ,$ wobei freq_{mid} der vordefinierte Schwellenwert in dem mittleren Bereich, v_{inf} eine mittlere Windgeschwindigkeit, r eine Rotorblattposition in Rotorblattlängsrichtung, LD eine durchschnittliche Lebensdauer einer Windenergieanlage, insbesondere 25 Jahre, α der Grenzanstellwinkel und VD_{max,mid} die über die durchschnittliche Lebensdauer der Windenergieanlage kumulierte maximal zulässige Verweildauer eines Anstellwinkels an einer Rotorblattposition bei einem Wert größer einem Stallwinkel an der Rotorblattposition ist, wobei der Stallwinkel als Anstellwinkel definiert ist, ab dem an der Rotorblattposition eine Strömungsablösung auftritt, VD_{max,mid} maximal 10⁶ s, bevorzugt maximal 10⁵ s, beträgt, in einem äußeren Bereich *Rₒ* von 80% der Rotorblattlänge bis 100% der Rotorblattlänge, bevorzugt 70% der Rotorblattlänge bis 100% der Rotorblattlänge definiert ist als ${freq}_{out} \left({v}_{inf}, r, α\right) = \frac{{VD}_{max , out}}{LD} ∀ r ∈ {R}_{o} ,$ wobei freqₒᵤₜ der vordefinierte Schwellenwert in dem äußeren Bereich, v_{inf} eine mittlere Windgeschwindigkeit, r eine Rotorblattposition in Rotorblattlängsrichtung, LD eine durchschnittliche Lebensdauer einer Windenergieanlage, insbesondere 25 Jahre, α der Grenzanstellwinkel und VD_{max,out} die über die durchschnittliche Lebensdauer der Windenergieanlage kumulierte maximal zulässige Verweildauer eines Anstellwinkels an einer Rotorblattposition bei einem Wert größer dem Stallwinkel an der Rotorblattposition ist, und VD_{max,out} maximal 10⁴ s, bevorzugt maximal 10³ s, besonders bevorzugt maximal 10² s beträgt.

Diese vorteilhafte Ausgestaltung eines Aspekts der Erfindung basiert auf der Erkenntnis der Erfindung, dass Strömungsablösung in verschiedenen Rotorblattteilsegmenten unterschiedliche Auswirkungen auf beispielsweise Lasten, generierte Leistung und Geräuschemission hat. Äußere Rotorblattpositionen, die einen größeren Abstand zur Rotorblattwurzel aufweisen haben dabei einen größeren Einfluss als innere Rotorblattpositionen mit geringerem Abstand zur Rotorblattwurzel. Insbesondere liegt der Erfindung die Erkenntnis zugrunde, dass in einem inneren Bereich *Rᵢ* zwischen der Rotorblattwurzel und 20% der Rotorblattlänge, das Auftreten von Strömungsablösung eine zu vernachlässigende Rolle spielt. Es ist somit bei einem Optimieren einer Windenergieanlage, insbesondere dem Optimieren einer Betriebsführung einer Windenergieanlage möglich den inneren Bereich eines Rotorblatts hinsichtlich Strömungsablösung unberücksichtigt zu lassen. Dies ermöglicht optimierte Betriebsweisen der Windenergieanlage, die die AEP der Windenergieanlage optimieren.

Für die Rotorblattteilsegmente in einem mittleren Bereich *Rₘ* eines Rotorblatts von 30% der Rotorblattlänge bis 60% der Rotorblattlänge, bevorzugt 20% der Rotorblattlänge bis 70% der Rotorblattlänge wurde erkannt, dass Strömungsablösung nur bis zu einem gewissen Grad, nämlich maximal über eine Dauer von 10⁶ s, bevorzugt maximal 10⁵ s über eine durchschnittliche Lebensdauer einer Windenergieanlage, insbesondere 25 Jahre, auftreten darf. Die Dauer der Strömungsablösung gibt dabei einen Gesamtwert aller Strömungsablösungen addiert über die durchschnittliche Lebensdauer der Windenergieanlage an, nicht etwa einen Maximalwert für die Dauer zwischen zwei Zuständen, an denen Strömung an dem Rotorblattteilsegment anliegt. Der vordefinierte Schwellenwert gibt in dieser Ausgestaltung also eine Gesamtdauer an, wie lange an einem jeweiligen Rotorblattteilsegment innerhalb der durchschnittlichen Lebensdauer einer Windenergieanlage Strömungsablösung auftreten darf, damit keine negativen Effekte auftreten.

Für Rotorblattteilsegmente in einem äußeren Bereich *Rₒ* von 80% der Rotorblattlänge bis 100% der Rotorblattlänge, bevorzugt 70% der Rotorblattlänge bis 100% der Rotorblattlänge darf Strömungsablösung über eine durchschnittliche Lebensdauer einer Windenergieanlage lediglich für eine Dauer von maximal 10⁴ s, bevorzugt maximal 10³ s, besonders bevorzugt maximal 10² s für einen optimierten Betrieb der Windenergieanlage auftreten. Diese Dauern werden im Rahmen der Erfindung auch als zulässige Verweildauern bezeichnet.

Es ist durchaus denkbar, dass sich diese zulässigen Verweildauern mit zukünftigen Rotorblattausgestaltungen oder Betriebsweisen einer Windenergieanlage um ein bis zwei Zehnerpotenzen erhöhen. Somit umfasst die vorliegende Erfindung insbesondere auch Verfahren zur Optimierung einer Windenergieanlage mit VD_{max,mid} maximal 10⁷ s, und V_{Dmax,out} maximal 10⁶ s, bevorzugt V_{Dmax,out} maximal 10⁵ s, die die im Rahmen dieser Erfindung beschriebenen positiven Effekte generieren.

Zusätzlich oder alternativ sind in einer weiteren Ausgestaltung des Aspekts der Erfindung die zulässigen Verweildauern als Funktion des Radius entlang der Rotorblattlänge definiert, beispielsweise konstant, linear abnehmend oder monoton abnehmend, insbesondere streng monoton abnehmend, zur Rotorblattspitze hin.

Grundlage für eine statistische Auswertung sind bevorzugt eine Vielzahl, beispielsweise etwa 1000, von 10 Minuten Zeitreihen. Diese bilden je einen sogenannten Lastfall ("Design Load Case", DLC) ab. Im Bereich der Lastensimulationen werden insbesondere noch weitere DLCs erstellt, die jeweils unterschiedliche Anlagensituationen wiederspiegeln. Die Zeitreihen, innerhalb der DLCs sind alle 10 Minuten lang, deren Anzahl variiert insbesondere aber stark. Die Anlagenlebensdauer dient dabei als gemeinsame Basis, auf die alle DLCs extrapoliert werden, um das Leben einer Anlage abzubilden.

In einer alternativen Variante der obigen Ausgestaltung nehmen die zulässigen Verweildauern im Strömungsabriss mit abnehmender Radiusposition zu und ein Verhältnis der zulässigen Verweildauern in einem blattspitzennahen Rotorblattteilsegment und der zulässigen Verweildauern in einem Rotorblattteilsegment bei etwa 50% Radius beträgt 10, vorzugsweise 100, bevorzugt 1000.

In einer weiteren vorteilhaften Ausgestaltung eines Aspekts der Erfindung, umfassen die unterschiedlichen Windbedingungen eine Turbulenzintensität. In dieser Ausgestaltung wird das Verhalten der Windenergieanlage demnach auch für bevorzugt unterschiedliche Turbulenzintensitäten simuliert.

Das Miteinbeziehen einer Turbulenzintensität in die Simulation ermöglicht eine genauere und bessere Optimierung der Windenergieanlage, da die Simulation tatsächliche Bedingungen, denen die Windenergieanlage im Betrieb ausgesetzt ist, besser abbildet.

In einer weiteren vorteilhaften Ausgestaltung eines Aspekts der Erfindung, umfasst der Grenzanstellwinkel einen saugseitigen Teil und einen druckseitigen Teil, wobei der saugseitige Teil einen Anstellwinkel im Bereich eines saugseitigen Stallwinkels angibt, wobei der saugseitige Stallwinkel als Anstellwinkel definiert ist, ab dem an dem jeweiligen Rotorblattteilsegment eine Strömungsablösung an der Saugseite des jeweiligen Rotorblattteilsegments auftritt und der druckseitige Teil einen Anstellwinkel im Bereich eines druckseitigen Stallwinkels angibt, wobei der druckseitige Stallwinkel als Anstellwinkel definiert ist, ab dem an dem jeweiligen Rotorblattteilsegment eine Strömungsablösung an der Druckseite des jeweiligen Rotorblattteilsegments auftritt, der Bereich eines Stallwinkels insbesondere den jeweiligen Stallwinkel ±3° umfasst.

In dieser Ausgestaltung wird der Schritt des Vergleichens der kumulierten Verweildauern mit den Grenzanstellwinkel der jeweiligen Rotorblattsegmente dann sowohl für den saugseitigen Teil des Grenzanstellwinkels, als auch den druckseitigen Teil des Grenzanstellwinkels durchgeführt.

Der Schritt des Anpassens der Betriebsführung umfasst in dieser Ausgestaltung ein Anpassen der Betriebsführung bis die kumulierten Verweildauern außerhalb eines von den Grenzanstellwinkeln, sowohl saugseitig als auch druckseitig, definierten Wertebereichs kleiner einem vordefinierten Schwellenwert sind.

Dies optimiert die Windenergieanlage und Betriebsführungen einer solchen weiter, da sowohl druckseitige als auch saugseitige Teile der Grenzanstellwinkel berücksichtigt werden.

In einer weiteren vorteilhaften Ausgestaltung eines Aspekts der Erfindung, umfasst der Schritt des Anpassens der Betriebsführung: eine Variation der Drehzahl des Rotors, und/oder eine Variation eines Pitchwinkels eines der Rotorblätter, und/oder eine Variation eines Generator-Drehmoments der Windenergieanlage, und/oder eine Anpassung standortspezifischer aerodynamischer Anbauteile der Windenergieanlage.

Aerodynamische Anbauteile der Windenergieanlage umfassen dabei insbesondere aerodynamische Anbauteile eines Rotorblattes und/oder aerodynamische Anbauteile der Gondel und/oder aerodynamische Anbauteile des Turms der Windenergieanlage. Aerodynamische Anbauteile sind beispielsweise Serrations, Vortex-Generatoren und/oder Klappen. Diese sind bevorzugt standortspezifisch an der Windenergieanlage angebracht um die Windenergieanlage an die standortspezifischen Bedingungen anzupassen. Alternativ oder zusätzlich umfasst der Schritt des Anpassens standortspezifischer aerodynamischer Anbauteile ein Anbringen aerodynamischer Anbauteile unter Berücksichtigung der standortspezifischen Bedingungen.

Die standortspezifischen aerodynamischen Anbauteile können dabei aktiv oder passiv ausgestaltet sein. Eine Anpassung aktiver standortspezifischer aerodynamische Anbauteile, auch aktiven Strömungskontrollelemente, umfasst beispielsweise eine Änderung der Steuerung der aktiven aerodynamischen Anbauteile. Diese aktiven Strömungskontrollelemente werden dabei im Betrieb der Windenergieanlage aktiv gesteuert. Diese Steuerung wird bei einem Anpassen der aktiven aerodynamischen Anbauteile angepasst, also geändert.

Eine Anpassung passiver standortspezifischer aerodynamischer Anbauteile umfasst beispielsweise das Anbringen oder Entfernen von Serrations, bevorzugt an einer Rotorblatthinterkante und/oder das Anbringen oder Entfernen von Vortex-Generatoren an einem Rotorblatt und/oder einem Turm und/oder einer Gondel der Windenergieanlage.

Eine Anpassung der Variation der Drehzahl des Rotors erfolgt beispielsweise durch eine Anpassung des Drehzahlsollwertes mit dem die Windenergieanlage betrieben wird oder eine Anpassung der für den Betrieb hinterlegten Pitchwinkel.

In einer weiteren vorteilhaften Ausgestaltung eines Aspekts der Erfindung, umfasst der Schritt des Simulierens der Windenergieanlage eine aeroelastische Simulation der Windenergieanlage. Diese aeroelastische Simulation der Windenergieanlage berücksichtigt beziehungsweise simuliert Biegungen und Drehungen der Windenergieanlage, die im tatsächlichen Betrieb der Windenergieanlage durch die auf die Windenergieanlage wirkenden Kräfte auftreten. Bei rein aerodynamischen Simulationen wird beispielsweise das Rotorblatt als starr angenommen. Bei einer aeroelastischen Simulation werden Biegungen des Rotorblatts, insbesondere bis zu 20 Metern an der Rotorblattspitze und Drehungen des Rotorblatts, beziehungsweise Drehungen einzelner Rotorblattabschnitte um bis zu 10° simuliert.

Eine aeroelastische Simulation ermöglicht daher eine bessere Optimierung der Windenergieanlage, da die realen Bedingungen der Windenergieanlage im Betrieb genauer simuliert werden.

Gemäß einem zweiten Aspekt der Erfindung wird eine Windenergieanlage umfassend einen Rotor umfassend mindestens ein Rotorblatt bereitgestellt, wobei das mindestens eine Rotorblatt eine Druckseite, eine Saugseite und einen veränderbaren Blatteinstellwinkel gegenüber einer Rotorebene aufweist und sich von einer Rotorblattwurzel zu einer Rotorblattspitze mit einer Rotorblattlänge erstreckt, und eine Steuerung, wobei die Steuerung dazu ausgestaltet ist ein Verfahren nach einem vorigen Aspekt der Erfindung durchzuführen.

Die Steuerung der Windenergieanlage umfasst dabei insbesondere verglichen mit einer herkömmlichen Steuerung einer Windenergieanlage zusätzliche Einheiten, beispielsweise eine Simulationseinheit, die eingerichtet ist den Schritt des Simulierens der Windenergieanlage durchzuführen, eine Kumulierungseinheit, die eingerichtet ist den Schritt des Kumulierens der Zeitreihen durchzuführen, eine Bereitstellungseinheit, die eingerichtet ist den Schritt des Bereitstellens wenigstens eines Grenzanstellwinkels pro Rotorblattteilsegment durchzuführen, beispielsweise aus hinterlegten Tabellen oder einem Server, zu dem eine Verbindung besteht, eine Vergleichseinheit, die eingerichtet ist den Schritt des Vergleichens der kumulierten Verweildauern mit den Grenzanstellwinkel der jeweiligen Rotorblattteilsegmente durchzuführen und einer Anpassungseinheit, die eingerichtet ist die Betriebsführung der Windenergieanlage anzupassen.

Gemäß einem dritten Aspekt der Erfindung wird ein Windpark bereitgestellt umfassend mehrere Windenergieanlagen nach dem vorigen Aspekt der Erfindung.

Gemäß einem vierten Aspekt der Erfindung wird ein Computerprogramm bereitgestellt, das, wenn auf einem Computer ausgeführt, ausgestaltet ist, ein Verfahren nach dem ersten Aspekt der Erfindung durchzuführen.

Insbesondere weist das Computerprogramm eine Schnittstelle zur Verbindung mit der Windenergieanlage, beziehungsweise mit einem weiteren Computerprogramm, das wiederum eine Verbindung zur Windenergieanlage oder einem weiteren solchen Computerprogramm aufweist, auf, um die Betriebsführung der Windenergieanlage anzupassen. Bevorzugt ist das Computerprogramm derart eingerichtet, dass es eine Optimierung der Windenergieanlage, beziehungsweise einer Betriebsführung der Windenergieanlage anhand eines erfindungsgemäßen Verfahrens durchführt und anschließend die Betriebsführung der Windenergieanlage an die optimierte Betriebsführung anpasst.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung einer Windenergieanlage,
- Fig. 2: eine schematische Darstellung eines Windparks,
- Fig. 3: eine schematische Darstellung eines ersten Konturdiagramms als Darstellung der Verweildauern von Anströmwinkelgruppen über den gesamten Blattradius einer Betriebsführung, die nicht nach einem ersten Ausführungsbeispiel der Erfindung angepasst ist
- Fig. 4: eine schematische Darstellung eines zweiten Konturdiagramms als Darstellung der Verweildauern von Anströmwinkelgruppen über den gesamten Blattradius einer Betriebsführung, die nach einem ersten Ausführungsbeispiel der Erfindung angepasst ist
- Fig. 5: eine schematische Darstellung eines dritten Konturdiagramms als Darstellung der Verweildauern von Anströmwinkelgruppen über den gesamten Blattradius einer Betriebsführung, die nicht nach einem zweiten Ausführungsbeispiel der Erfindung angepasst ist
- Fig. 6: eine schematische Darstellung eines vierten Konturdiagramms als Darstellung der Verweildauern von Anströmwinkelgruppen über den gesamten Blattradius einer Betriebsführung, die nicht nach einem zweiten Ausführungsbeispiel der Erfindung angepasst ist

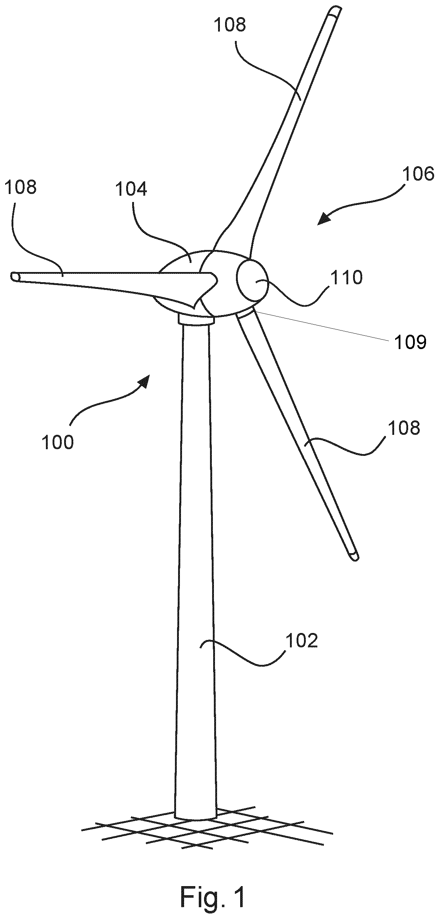

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

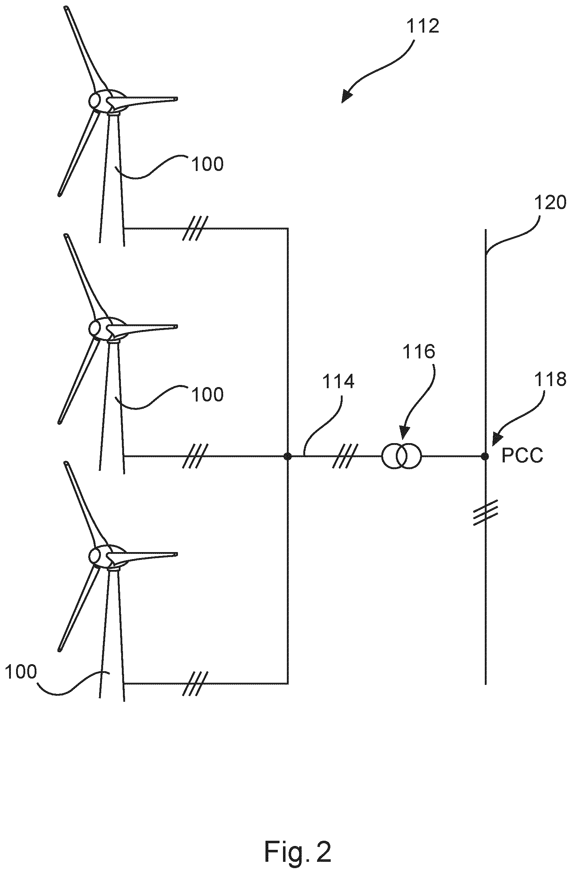

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

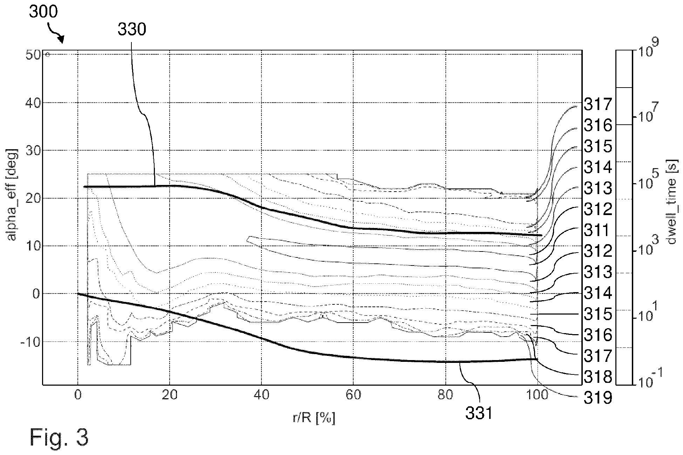

Figur 3 zeigt eine schematische Darstellung eines ersten Konturdiagramms 300 als Darstellung der Verweildauern von Anströmwinkelgruppen über den gesamten Blattradius einer Betriebsführung, die nicht nach einem ersten Ausführungsbeispiel der Erfindung angepasst ist. Das Konturdiagramm zeigt ein beispielhaftes Ergebnis der ersten vier Schritte eines erfindungsgemäßen Verfahrens, nämlich des Simulierens, Kumulierens, Bereitstellens und Vergleichens für einen Windgeschwindigkeitsbereich, bevorzugt einer Jahresmittelwindgeschwindigkeit. Das Konturdiagramm weist auf der x-Achse die relative Rotorblattlänge, r/R in %, und auf der y-Achse den Anstellwinkel, alpha_eff in Grad, auf. Die Ergebnisse der Simulation, nämlich die simulierten Anstellwinkel sind über die gesamte Länge des Rotorblatts entsprechend der kumulierten Verweildauern in Sekunden aufgetragen. In der Simulation aufgetretene Anstellwinkel über etwa 25° sind in diesem Konturdiagramm nicht gezeigt. Dies beruht auf der Erkenntnis, dass im Blattwurzelbereich bei niedrigen Rotordrehzahlen und hohen Turbulenzen in der Anströmung Anströmwinkel bis zu ±180° auftreten können. Die Grenzanstellwinkel sind jedoch im Bereich ±25° anzutreffen. Werte außerhalb sind nach heutigem Stand nicht relevant und werden daher im Verfahren nicht berücksichtigt.

Das Konturdiagramm zeigt die kumulierten Verweildauern der simulierten Anstellwinkel unterteilt in Wertebereiche nach der Zehnerpotenz der jeweiligen Werte. Die jeweiligen Wertebereiche umfassen dabei die folgenden Werte:

**Tabelle 1: Wertebereiche der kumulierten Verweildauer Figur 3.**

| | Kumulierte Verweildauer in *s* |
|---|---|
| Wertebereich 311 | ≥ 1·10⁷ |
| Wertebereich 312 | 1·10⁷ > ... ≥ 1·10⁶ |
| Wertebereich 313 | 1·10⁶ > ... ≥ 1·10⁵ |
| Wertebereich 314 | 1·10⁵ > ... ≥ 1·10⁴ |
| Wertebereich 315 | 1·10⁴ > ... ≥ 1·10³ |
| Wertebereich 316 | 1·10³ > ... ≥ 1·10² |
| Wertebereich 317 | 1 . 10² > ... ≥ 1·10¹ |
| Wertebereich 318 | 1 .10¹ > ... ≥ 1·10⁰ |
| Wertebereich 319 | 1·10⁰ > ... ≥ 1 · 10-¹ |

Das Konturdiagramm 300 zeigt außerdem zwei Grenzanstellwinkel 330, 331, den saugseitigen Grenzanstellwinkel 330 und den druckseitigen Grenzanstellwinkel 331. Der saugseitige Grenzanstellwinkel 330 beträgt in diesem Beispiel an der Rotorblattwurzel etwa 22° und nimmt über den Verlauf des Rotorblatts bis hin zu etwa 12° an der Rotorblattspitze ab. Der druckseitige Grenzanstellwinkel 331 beträgt an der Rotorblattwurzel etwa 0° und nimmt über den Verlauf des Rotorblatts bis hin zu etwa -14° an der Rotorblattspitze ab. Die kumulierten Verweildauern liegen dabei für Rotorblattteilsegmente bis etwa 25% der Rotorblattlänge unterhalb des druckseitigen Grenzanstellwinkels 331 und somit außerhalb des durch die Grenzanstellwinkel 330, 331 definierten zulässigen Wertebereichs. Die kumulierten Verweildauern unterhalb des druckseitigen Grenzanstellwinkels 331 weisen die Wertebereiche 315, 316, 317, 318 und 319 auf. Es traten in der Simulation also Anstellwinkel außerhalb des druckseitigen Grenzanstellwinkels 331 über eine Dauer von je bis zu 10000 s auf. Auf der Saugseite traten dabei in der Simulation Anstellwinkel größer dem saugseitigen Grenzanstellwinkel 330 über die gesamte Rotorblattlänge auf. Nahe der Rotorblattwurzel treten kumulierte Verweildauern der Anstellwinkel größer dem saugseitigen Grenzanstellwinkel 330 in den Wertebereichen 312, 313, 314, 315, 316 und 317, insbesondere im Wertebereich 312 also von über 1000000 s auf. Ab etwa 30 % der Rotorblattlänge in Richtung Rotorblattspitze treten kumulierte Verweildauern der Anstellwinkel größer dem saugseitigen Grenzanstellwinkel 330 in den Wertebereichen 313, 314, 315, 316 und 317 also bis zu 1000000 s auf. Nahe der Rotorblattspitze, ab etwa 85 % der Rotorblattlänge, treten kumulierte Verweildauern der Anstellwinkel größer dem saugseitigen Grenzanstellwinkel 330 in den Wertebereichen 314, 315, 316 und 317 also bis zu 100000 s auf.

Zur Beurteilung, ob die kumulierten Verweildauern außerhalb des von den Grenzanstellwinkeln 330, 331 definierten Wertebereichs kleiner einem vordefinierten Schwellenwert sind, werden alle kumulierten Verweildauern außerhalb des von den Grenzanstellwinkeln 330, 331 definierten Wertebereichs, also sowohl kumulierte Verweildauern von Anstellwinkeln größer dem saugseitigen Grenzanstellwinkel 330, als auch kumulierte Verweildauern von Anstellwinkeln kleiner dem druckseitigen Grenzanstellwinkel 331 zusammengenommen, beispielsweise addiert. Alternativ ist der vordefinierte Schwellenwert beispielsweise als radiusabhängiger Grenzwert der kumulierten Verweildauern außerhalb der Grenzanstellwinkel definiert. Hierbei kann es sich um einen vordefinierten Schwellenwert pro Rotorblattbereich, Rotorblattteilsegment oder pro anderer Abschnittslänge entlang der Richtung der Rotorblattlänge handeln.

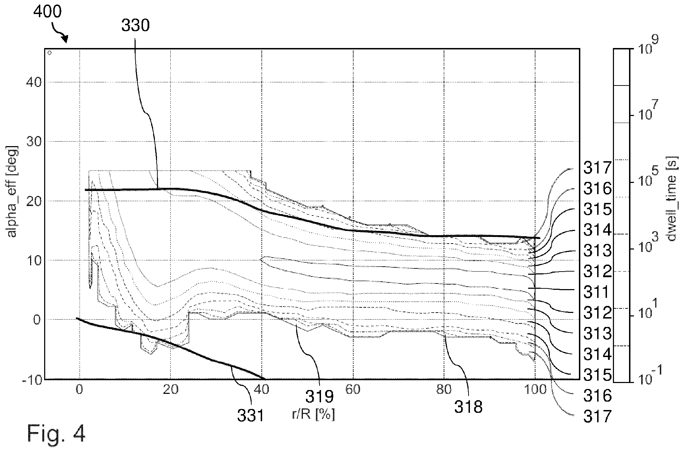

Figur 4 zeigt eine schematische Darstellung eines zweiten Konturdiagramms 400 als Darstellung der Verweildauern von Anströmwinkelgruppen über den gesamten Blattradius einer Betriebsführung einer Windenergieanlage, die nach einem ersten Ausführungsbeispiel der Erfindung angepasst ist. Das zweite Konturdiagramm 400 unterscheidet sich also von dem ersten Konturdiagramm 300 darin, dass die kumulierten Verweildauern der simulierten Anstellwinkelgruppen einer mit einem erfindungsgemäßen Verfahren optimierten Betriebsführung gezeigt sind. Die Wertebereiche der kumulierten Verweildauern sowie die Grenzanstellwinkel 330, 331 entsprechen denen aus Figur 3.

Die optimierte Betriebsführung in dem zweiten Konturdiagramm 400 unterscheidet sich von der nicht optimierten Betriebsführung aus dem ersten Konturdiagramm 300 unter anderem dadurch, dass die kumulierten Verweildauern von Anstellwinkel außerhalb des von den Grenzanstellwinkeln 330, 331 eingeschlossenen Wertebereichs geringer sind. Beispielsweise betragen die kumulierten Verweildauern von Anstellwinkeln kleiner dem druckseitigen Grenzanstellwinkel 331 nur maximal 1000 s. Hinsichtlich des saugseitigen Grenzanstellwinkels 330 betragen die kumulierten Verweildauern von Anstellwinkeln größer dem saugseitigen Grenzanstellwinkel 330 ab etwa 50% der Rotorblattlänge in Richtung Rotorblattspitze maximal 10000 s. In einem Rotorblattbereich nahe der Rotorblattspitze ab etwa 75% der Rotorblattlänge treten keine Anstellwinkel größer dem saugseitigen Grenzanstellwinkel 330 auf. In dem Rotorblattbereich nahe der Rotorblattwurzel bis etwa 20% der Rotorblattlänge treten Verweildauern in der Größenordnung 10⁶ s auf. Dieser optimierten Betriebsführung liegt die Erkenntnis zugrunde, dass der Rotorblattbereich nahe der Rotorblattwurzel für eine erfindungsgemäße Optimierung nachrangig ist. Der Rotorblattbereich nahe der Rotorblattspitze ist hingegen umso relevanter. Dementsprechend wurde im vorliegenden Beispiel aus Figur 4 die Betriebsführung derart optimiert, dass nahe der Rotorblattspitze keine Anstellwinkel außerhalb der Grenzanstellwinkel 330, 331 auftreten, um negativen Effekten durch potentiellen Strömungsabriss vorzubeugen. In einem mittleren Bereich des Rotorblatts, in diesem Beispiel von etwa 25% bis 75% der Rotorblattlänge, treten in der optimierten Betriebsführung durchaus Anstellwinkel außerhalb des durch die Grenzanstellwinkel 330, 331 definierten Bereichs auf. Die kumulierten Verweildauern dieser Anstellwinkel ist jedoch derart optimiert, dass keine negativen Effekte durch potentiellen Strömungsabriss in diesem Bereich auftreten. Im Vergleich zu einer Betriebsführung, die über die gesamte Rotorblattlänge keine Anstellwinkel außerhalb des durch die Grenzanstellwinkel 330, 331 definierten Bereichs zulässt, ist die AEP einer Windenergieanlage betrieben mit der optimierten Betriebsführung aus Figur 4 gesteigert.

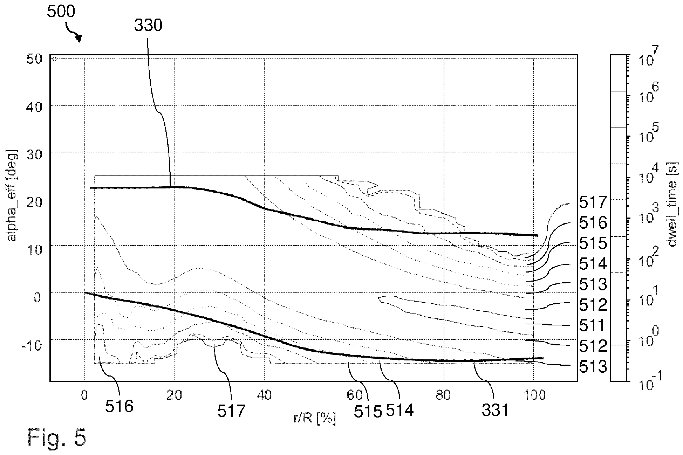

Figur 5 zeigt eine schematische Darstellung eines dritten Konturdiagramms 500 als Darstellung der Verweildauern von Anströmwinkelgruppen über den gesamten Blattradius einer Betriebsführung, die nicht nach einem ersten Ausführungsbeispiel der Erfindung angepasst ist. Äquivalent zu Figur 3 sind die kumulierten Verweildauern von Anstellwinkelgruppen über die Rotorblattlänge aufgetragen. Die jeweiligen Wertebereiche der kumulierten Verweildauern umfassen dabei die folgenden Werte:

**Tabelle 2: Wertebereiche der kumulierten Verweildauer Figur 5.**

| | Kumulierte Verweildauer in *s* |
|---|---|
| Wertebereich 511 | ≥ 1·10⁵ |
| Wertebereich 512 | 1·10⁵ > ... ≥ 1·10⁴ |
| Wertebereich 513 | 1·10⁴ > ... ≥ 1·10³ |
| Wertebereich 514 | 1·10³ > ... ≥ 1·10² |
| Wertebereich 515 | 1·10² > ... ≥ 1·10¹ |
| Wertebereich 516 | 1·10¹ > ... ≥ 1·10⁰ |
| Wertebereich 517 | 1·10⁰ > ... ≥ 1·10⁻¹ |

Sowohl auf der Druckseite, als auch auf der Saugseite des Rotorblatts treten in dieser Simulation Anstellwinkel außerhalb des durch den druckseitigen Grenzanstellwinkel 331 und den saugseitigen Grenzanstellwinkel 330 definierten Wertebereichs auf. Auf der Druckseite mit Verweildauern mit bis zu Größenordnung 10¹ s, auf der Saugseite auf der Rotorblattwurzel-nahen Rotorblatthälfte mit Verweildauern bis in die Größenordnung 10⁴ s. Die kumulierten Verweildauern von Anstellwinkeln außerhalb des durch die Grenzanstellwinkel 330, 331 definierten Wertebereichs nehmen in Richtung Rotorblattspitze ab. Ab etwa 85 % der Rotorblattlänge treten keine Anstellwinkel außerhalb des durch die Grenzanstellwinkel 330, 331 eingeschlossenen Wertebereichs auf.

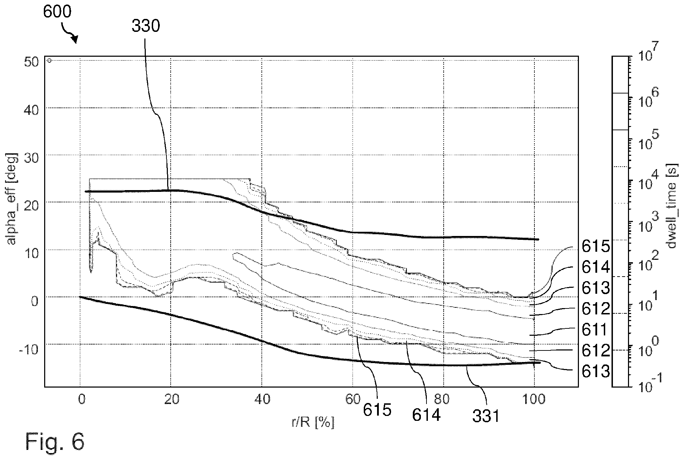

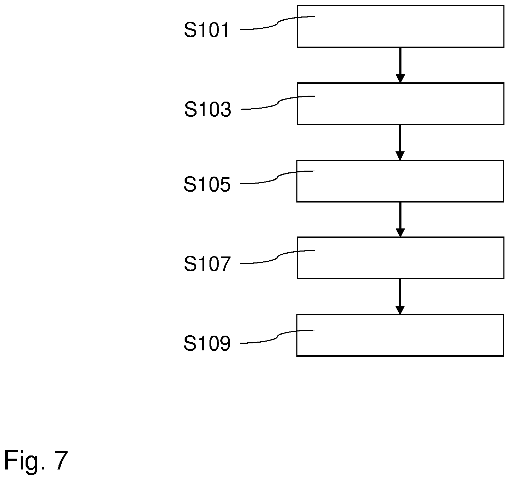

Figur 6 zeigt eine schematische Darstellung eines vierten Konturdiagramms 600 als Darstellung der Verweildauern von Anströmwinkelgruppen über den gesamten Blattradius einer Betriebsführung einer Windenergieanlage, die nach einem ersten Ausführungsbeispiel der Erfindung angepasst ist. Das vierte Konturdiagramm 600 unterscheidet sich also von dem dritten Konturdiagramm 500 darin, dass die kumulierten Verweildauern der simulierten Anstellwinkelgruppen einer mit einem erfindungsgemäßen Verfahren optimierten Betriebsführung gezeigt sind. Die Grenzanstellwinkel 330, 331 entsprechen denen aus Figur 5.

Äquivalent zu Figur 5 sind die kumulierten Verweildauern von Anstellwinkelgruppen über die Rotorblattlänge aufgetragen. Die jeweiligen Wertebereiche der kumulierten Verweildauern umfassen dabei die folgenden Werte:

**Tabelle 3: Wertebereiche der kumulierten Verweildauer Figur 6.**

| | Kumulierte Verweildauer in *s* |
|---|---|
| Wertebereich 611 | ≥ 1·10⁴ |
| Wertebereich 612 | 1·10⁴ **>** ... ≥ 1·10³ |
| Wertebereich 613 | 1·10³ > ... ≥ 1·10² |
| Wertebereich 614 | 1·10² > ... ≥ 1·10¹ |
| Wertebereich 615 | 1·10¹ > ... ≥ 1·10⁰ |

Die optimierte Betriebsführung in dem vierten Konturdiagramm 600 unterscheidet sich von der nicht optimierten Betriebsführung aus dem dritten Konturdiagramm 500 unter anderem dadurch, dass die kumulierten Verweildauern von Anstellwinkel außerhalb des von den Grenzanstellwinkeln 330, 331 eingeschlossenen Bereichs geringer sind. Beispielsweise treten keine kumulierten Verweildauern von Anstellwinkeln kleiner dem druckseitigen Grenzanstellwinkel 331 auf. Hinsichtlich des saugseitigen Grenzanstellwinkels 330 treten ab etwa 50% der Rotorblattlänge in Richtung Rotorblattspitze keine kumulierten Verweildauern von Anstellwinkeln größer dem saugseitigen Grenzanstellwinkel 330 auf. In dem Rotorblattbereich von der Rotorblattwurzel aus bis etwa 40% der Rotorblattlänge treten Verweildauern mit bis zu Größenordnung 10³ s auf. Ab etwa 40% der Rotorblattlänge von der Rotorblattwurzel aus bis zu etwa 50% der Rotorblattlänge nehmen die kumulierten Verweildauern von Anstellwinkeln außerhalb des von den Grenzanstellwinkeln 330, 331 eingeschlossenen Wertebereichs rapide ab, sodass ab 50% der Rotorblattlänge in Richtung Rotorblattspitze keine Anstellwinkel größer dem saugseitigen Grenzanstellwinkel 330 auftreten.

Aus Sicht des erzeugten Auftriebs und der generierten Leistung ist die Betriebsführung aus Figur 6 etwas überregelt. Die aufgetretenen Anstellwinkel liegen teils deutlich unter dem Grenzanstellwinkel. Somit birgt die optimierte Betriebsführung aus Figur 6 weiteres Potential, das beispielsweise mit zusätzlichen Schritten der Leistungsoptimierung ausgeschöpft werden kann.

Die absoluten Werte und Verläufe der Konturdiagramme sind als Beispiele zur Veranschaulichung der Auswirkung eines erfindungsgemäßen Verfahrens auf eine Betriebsführung einer Windenergieanlage zu bewerten und können in Ausführungsformen und weiteren Ausgestaltungen der Erfindung abweichen.

### Bezugszeichen

100 Windenergieanlage
102 Turm
104 Gondel
106 Rotor
108 Rotorblatt
109 Rotorblattwurzel
110 Spinner
112 Windpark
114 Parknetz
116 Transformator
118 Einspeisepunkt
120 Versorgungsnetz
300 erstes Konturdiagramm
311, 312, 313, 314, 315, 316, 317, 318, 319 Wertebereich
330 saugseitiger Grenzanstellwinkel
331 druckseitiger Grenzanstellwinkel
400 zweites Konturdiagramm
500 drittes Konturdiagramm
511, 512, 513, 514, 515, 516, 517 Wertebereich
600 viertes Konturdiagramm
611, 612, 613, 614, 615 Wertebereich

## Patentansprüche

1. Verfahren zur Optimierung einer Windenergieanlage (100), wobei die Windenergieanlage (100) einen Rotor (106) umfassend mindestens ein Rotorblatt (108) umfasst, wobei das mindestens eine Rotorblatt (108) eine Druckseite, eine Saugseite und einen veränderbaren Blatteinstellwinkel gegenüber einer Rotorebene aufweist und sich von einer Rotorblattwurzel (109) zu einer Rotorblattspitze mit einer Rotorblattlänge erstreckt, wobei die Windenergieanlage (100) mit einer Betriebsführung betrieben wird, umfassend die Schritte:
Simulieren (S101) der Windenergieanlage (100) für unterschiedliche Windbedingungen und mehrere Rotorblattteilsegmente, wobei jede Simulation das Verhalten der Windenergieanlage (100) bei einer der unterschiedlichen Windbedingung für einen vorbestimmten Zeitraum simuliert, wobei jede Simulation Zeitreihen von auftretenden Anstellwinkeln pro Rotorblattteilsegment erfasst, wobei die unterschiedlichen Windbedingungen unterschiedliche Windgeschwindigkeiten umfassen und es sich bei dem Rotorblattteilsegment um einen Abschnitt des Rotorblatts (108) mit einer vordefinierten Länge in Richtung der Rotorblattlänge, insbesondere von 1 m, handelt,
Kumulieren (S103) der Zeitreihen um kumulierte Verweildauern mehrerer Anstellwinkelgruppen mit Zuordnung zur jeweiligen Windgeschwindigkeitsgruppe für mehrere Rotorblattteilsegmente zu erhalten, wobei jede Anstellwinkelgruppe jeweils einen Bereich von Anstellwinkeln umfassen und jede Windgeschwindigkeitsgruppe jeweils einen Bereich von Windgeschwindigkeiten umfasst,
Bereitstellen (S105) wenigstens eines Grenzanstellwinkels pro Rotorblattteilsegment,
Vergleichen (S107) der kumulierten Verweildauern mit den Grenzanstellwinkel der jeweiligen Rotorblattteilsegmente,
Anpassen (S109) der Betriebsführung bis die kumulierten Verweildauern außerhalb eines von den Grenzanstellwinkeln definierten Wertebereichs kleiner einem vordefinierten Schwellenwert sind.

2. Verfahren zur Optimierung einer Windenergieanlage (100) nach Anspruch 1, umfassend den folgenden Schritt,
Bereitstellen von mindestens einem standortspezifischen Parameter am Standort der Windenergieanlage (100),
wobei der Schritt des Simulierens (S101) ferner unter Berücksichtigung des mindestens einen standortspezifischen Parameters durchgeführt wird.

3. Verfahren zur Optimierung einer Windenergieanlage (100) nach Anspruch 2, wobei der mindestens eine standortspezifische Parameter umfasst:
eine Turbulenzintensität, und/oder
eine Luftdichte, und/oder
eine horizontale Windscherung, und/oder
eine vertikale Windscherung, und/oder
ein lokales Wetterereignis.

4. Verfahren zur Optimierung einer Windenergieanlage (100) nach einem der vorstehenden Ansprüche, umfassen den folgenden Schritt:
Bereitstellen von mindestens einem anlagenspezifischen Parameter der Windenergieanlage (100),
wobei der Schritt des Simulierens (S101) ferner unter Verwendung des mindestens einen anlagenspezifischen Parameter durchgeführt wird.

5. Verfahren zur Optimierung einer Windenergieanlage (100) nach Anspruch 4, wobei der mindestens eine anlagenspezifische Parameter umfasst:
einen Verschmutzungsgrad des mindestens einen Rotorblattes (108), und/oder
einen Abnutzungsgrad des mindestens einen Rotorblattes (108), und/oder
eine produktionsbedingte Formabweichung des mindestens einen Rotorblattes (108), und /oder
ein aerodynamisches Anbauteil des mindestens einen Rotorblattes (108), und /oder
vorbestimmte Maximallasten, insbesondere für mindestens eines der Rotorblattteilsegmente, für die das mindestens eine Rotorblatteilsegment ausgelegt ist.

6. Verfahren zur Optimierung einer Windenergieanlage (100) nach einem der vorstehenden Ansprüche, wobei die Windenergieanlage (100) Teil eines Windparks (112) umfassend mehrere Windenergieanlagen ist, umfassen den folgenden Schritt:
Bereitstellen von mindestens einer Lage mindestens einer der mehreren Windenergieanlagen des Windparks (112) in Bezug auf die Windenergieanlage (100),
wobei der Schritt des Simulierens (S101) die mindestens eine Lage mindestens einer der mehreren Windenergieanlagen des Windparks (112) berücksichtigt und insbesondere potentielle Nachlaufeffekte der mindestens einen der mehreren Windenergieanlagen des Windparks (112) anhand der mindestens eine Lage simuliert.

7. Verfahren zur Optimierung einer Windenergieanlage (100) nach einem der vorstehenden Ansprüche, wobei der vordefinierte Schwellenwert einen Wert aufweist, der das Auftreten folgender Ereignisse mit negativem Effekt an der Windenergieanlage (100) verhindert:
Überschreiten eines vordefinierten ersten Schwellwerts der Geräuschemission der Windenergieanlage, und/oder
Überschreiten von vordefinierten Maximallasten, für die die Windenergieanlage (100) ausgelegt ist, und/oder
Verringerung der generierten Leistung der Windenergieanlage (100).

8. Verfahren zur Optimierung einer Windenergieanlage (100) nach einem der vorhergehenden Ansprüche, wobei der vordefinierte Schwellenwert für Rotorblattteilsegmente
in einem mittleren Bereich *Rₘ* von 30% der Rotorblattlänge bis 60% der Rotorblattlänge, bevorzugt 20% der Rotorblattlänge bis 70% der Rotorblattlänge definiert ist als ${freq}_{mid} \left({v}_{inf}, r, α\right) = \frac{{VD}_{max , mid}}{LD} ∀ r ∈ {R}_{m} ,$
wobei freq_{mid} der vordefinierte Schwellenwert in dem mittleren Bereich, v_{inf} eine mittlere Windgeschwindigkeit, r eine Rotorblattposition in Rotorblattlängsrichtung, LD eine durchschnittliche Lebensdauer einer Windenergieanlage, insbesondere 25 Jahre, α der Grenzanstellwinkel und VD_{max,mid} die über die durchschnittliche Lebensdauer der Windenergieanlage kumulierte maximal zulässige Verweildauer eines Anstellwinkels an einer Rotorblattposition bei einem Wert größer einem Stallwinkel an der Rotorblattposition ist, wobei der Stallwinkel als Anstellwinkel definiert ist, ab dem an der Rotorblattposition eine Strömungsablösung auftritt,
VD_{max,mid} maximal 10⁶ s, bevorzugt maximal 10⁵ s, beträgt,
in einem äußeren Bereich *Rₒ* von 80% der Rotorblattlänge bis 100% der Rotorblattlänge, bevorzugt 70% der Rotorblattlänge bis 100% der Rotorblattlänge definiert ist als ${freq}_{out} \left({v}_{inf}, r, α\right) = \frac{{VD}_{max , out}}{LD} ∀ r ∈ {R}_{o} ,$
wobei freqₒᵤₜ der vordefinierte Schwellenwert in dem äußeren Bereich, v_{inf} eine mittlere Windgeschwindigkeit, r eine Rotorblattposition in Rotorblattlängsrichtung, LD eine durchschnittliche Lebensdauer einer Windenergieanlage, insbesondere 25 Jahre, α der Grenzanstellwinkel und VD_{max,out} die über die durchschnittliche Lebensdauer der Windenergieanlage kumulierte maximal zulässige Verweildauer eines Anstellwinkels an einer Rotorblattposition bei einem Wert größer dem Stallwinkel an der Rotorblattposition ist, und
VD_{max,out} maximal 10⁴ s, bevorzugt maximal 10³ s, besonders bevorzugt maximal 10² s beträgt.

9. Verfahren zur Optimierung einer Windenergieanlage (100) nach einem der vorhergehenden Ansprüche, wobei die unterschiedlichen Windbedingungen eine Turbulenzintensität umfassen.

10. Verfahren zur Optimierung einer Windenergieanlage (100) nach einem der vorhergehenden Ansprüche, wobei der Grenzanstellwinkel einen saugseitigen Teil und einen druckseitigen Teil umfasst, wobei
der saugseitige Teil einen Anstellwinkel im Bereich eines saugseitigen Stallwinkels angibt, wobei der saugseitige Stallwinkel als Anstellwinkel definiert ist, ab dem an dem jeweiligen Rotorblattteilsegment eine Strömungsablösung an der Saugseite des jeweiligen Rotorblattteilsegments auftritt und
der druckseitige Teil einen Anstellwinkel im Bereich eines druckseitigen Stallwinkels angibt, wobei der druckseitige Stallwinkel als Anstellwinkel definiert ist, ab dem an dem jeweiligen Rotorblattteilsegment eine Strömungsablösung an der Druckseite des jeweiligen Rotorblattteilsegments auftritt,
der Bereich eines Stallwinkels insbesondere den jeweiligen Stallwinkel ±3° umfasst.

11. Verfahren zur Optimierung einer Windenergieanlage (100) nach einem der vorstehenden Ansprüche, wobei der Schritt des Anpassens der Betriebsführung (S109) umfasst:
eine Variation der Drehzahl des Rotors (106), und/oder
eine Variation eines Pitchwinkels eines der Rotorblätter (108), und/oder
eine Variation eines Generator-Drehmoments der Windenergieanlage (100), und/oder
eine Anpassung standortspezifischer aerodynamischer Anbauteile der Windenergieanlage (100).

12. Verfahren zur Optimierung einer Windenergieanlage (100) nach einem der vorstehenden Ansprüche, wobei der Schritt des Simulierens (S101) der Windenergieanlage (100) eine aeroelastische Simulation der Windenergieanlage (100) umfasst.

13. Windenergieanlage (100) umfassend einen Rotor (106) umfassend mindestens ein Rotorblatt (108), wobei das mindestens eine Rotorblatt (108) eine Druckseite, eine Saugseite und einen veränderbaren Blatteinstellwinkel gegenüber einer Rotorebene aufweist und sich von einer Rotorblattwurzel (109) zu einer Rotorblattspitze mit einer Rotorblattlänge erstreckt, und eine Steuerung, wobei die Steuerung dazu ausgestaltet ist ein Verfahren nach einem der Ansprüche 1 bis 12 durchzuführen.

14. Windpark (112) umfassend mehrere Windenergieanlagen (100) nach Anspruch 13.

15. Computerprogramm, das, wenn auf einem Computer ausgeführt, ausgestaltet ist, ein Verfahren nach einem der Ansprüche 1 bis 12 durchzuführen.
